# EUROPÄISCHE PATENTANMELDUNG

(11) **EP 1 693 147 A1**
(43) Veröffentlichungstag der Anmeldung: **23.08.2006**
(21) Anmeldenummer: 05003226.7
(22) Anmeldetag: 16.02.2005
(51) Int. Cl.: B23Q 11/00, B23Q 1/28

(54) **Doppelspindel-Werkzeugmaschine mit zwei Werkstückhaltern von denen einer verstellbar ist**

(71) Anmelder: Cross Hüller GmbH, 71636 Ludwigsburg (DE)
(72) Erfinder: Hillinger, Alfred, 71711 Murr (DE); Bruder, Hubert, 71636 Ludwigsburg (DE)
(74) Vertreter: Rau, Manfred

(57) **Zusammenfassung**

Eine Doppelspindel-Werkzeugmaschine weist zwei Werkzeug-Spindeln und zwei diesen zugeordnete Werkstück-Halter auf. Ein Werkstück-Halter weist eine Werkstück-Tragplatte auf, die gegen ein verstellbares Widerlager (45) abgestützt ist. Dieses Widerlager (45) wird mittels einer VerstellEinrichtung (53) verstellt, und zwar in Abhängigkeit von Änderungen des Abstands der Drehachsen der Werkzeug-Spindeln.

## Beschreibung

Die Erfindung betrifft eine Doppelspindel-Werkzeugmaschine nach dem Oberbegriff des Anspruches 1.

Derartige Doppelspindel-Werkzeugmaschinen sind allgemein bekannt, beispielsweise aus der WO 2004/067223 A1. Ein Grundproblem dieser Doppelspindel-Werkzeugmaschinen liegt darin, dass der Abstand zwischen den Drehachsen der Werkzeug-Spindeln nicht exakt einhaltbar ist. Dies liegt zum einen darin, dass die Spindeln nicht absolut exakt zueinander ausgerichtet werden können. Zum anderen liegt dies sehr wesentlich daran, dass der Abstand der Werkzeug-Spindeln sich unter dem Einfluss zahlreicher Temperatureinflüsse, z. B. von der Maschine und von der Umgebung her, ändert.

Der Erfindung liegt die Aufgabe zugrunde, Abstandsänderungen der Drehachsen der Werkzeug-Spindeln mit relativ einfachen Mitteln auch während des Betriebs der Maschine kompensieren zu können.

Diese Aufgabe wird erfindungsgemäß durch die Merkmale im Kennzeichnungsteil des Anspruches 1 gelöst. Der Kern der Erfindung liegt darin, dass der Abstand der Drehachsen der Werkzeug-Spindeln direkt oder indirekt ständig oder in Zeitabständen gemessen wird und dass entsprechend diesem Ergebnis ein Werkstück-Halter nachgestellt wird. Dies kann stufenlos oder schrittweise erfolgen, und zwar rotatorisch direkt über die zugeordnete Werkzeug-Spindel oder durch einen Tastbetrieb. Zahlreiche vorteilhafte Ausgestaltungen hierzu ergeben sich aus den Unteransprüchen.

Weitere Merkmale, Vorteile und Einzelheiten der Erfindung ergeben sich aus der nachfolgenden Beschreibung von Ausführungsbeispielen anhand der Zeichnung. Es zeigt
- Fig. 1: eine Stirnansicht einer Werkzeugmaschine nach der Erfindung,
- Fig. 2: eine perspektivische Ansicht einer Grundplatte mit einer Werkstück-Tragplatte der Werkzeugmaschine,
- Fig. 3: ein verstellbares Widerlager für die Werkstück-Tragplatte und
- Fig. 4: eine Antriebs-Einrichtung für das verstellbare Widerlager.

Bei der in der Zeichnung dargestellten Werkzeugmaschine handelt es sich um eine Doppelspindel-Werkzeugmaschine mit einem rechteckigen, durch einen Rahmen gebildeten Ständer 1, der durch sich in y-Richtung erstreckende vertikale Seiten-Stützen 2, 3 und jeweils einen diese verbindenden horizontalen, sich in x-Richtung erstreckenden oberen Quer-Holm 4 und einen unteren, nicht dargestellten Quer-Holm gebildet ist. Die Seiten-Stützen 2, 3 und die Quer-Holme 4 umschließen einen Innenraum 5, der beidseitig offen ist, und zwar insbesondere zum Arbeitsraum 6 hin. Der Ständer 1 ist über ein Untergestell 7 auf einer Fundament-Platte 8 abgestützt.

An der dem Arbeitsraum 6 zugewandten Stirnseite des Ständers 1 ist ein ebenfalls rahmenartig ausgebildeter x-Schlitten 9 in x-Richtung verschiebbar angeordnet. Hierzu sind an den Quer-Holmen 4 jeweils eine x-Führungs-Schiene 10 angebracht, auf denen der x-Schlitten 9 geführt ist. Der Antrieb des x-Schlittens 9 erfolgt mittels eines x-Motors 11 über eine sich in x-Richtung erstreckende, in den Seiten-Stützen 2, 3 des Ständers 1 drehfest gelagerte x-Kugelrollspindel 12.

Auf der dem Arbeitsraum 6 zugewandten Stirnseite des x-Schlittens 9 ist ein in y-Richtung, also vertikal, verschiebbarer y-Schlitten 13 geführt. Hierzu sind an den Seitenbereichen und einem vertikalen Mittel-Steg 14 des rahmenartigen x-Schlittens 9 jeweils eine y-Führungs-Schiene 15 angebracht, auf denen der y-Schlitten 13 verschiebbar geführt ist. Der Antrieb des y-Schlittens 13 erfolgt mittels eines auf dem x-Schlitten 9 angebrachten y-Motors 16 über eine y-Kugelrollspindel 17.

Auf dem y-Schlitten 13 befinden sich im Abstand voneinander zwei Werkzeug-Spindeln 18, 19, die sich in z-Richtung erstrecken und nach vom zum Arbeitsraum 6 hin und nach hinten durch die inneren Freiräume 20 des x-Schlittens 9 in den Innenraum 5 des Ständers 1 hineinragen. Die Werkzeug-Spindeln 18, 19 sind jeweils um eine sich in z-Richtung erstreckende z-Drehachse 21, 22 mittels jeweils eines nur angedeuteten Antriebsmotors 18a drehantreibbar. Die Werkzeug-Spindeln 18, 19 sind in x- und y-Richtung relativ zueinander ortsfest auf dem y-Schlitten angeordnet, in z-Richtung jedoch auf z-Führungs-Schienen 23 mittels jeweils eines nur angedeuteten z-Motors 19a verschiebbar angeordnet.

Im Arbeitsraum 6 ist vor dem Ständer 1 auf der Fundament-Platte 8 ein Werkstück-Träger-Bett 24 gelagert, auf dem ein Werkstück-Träger 25 abgestützt ist. Der Werkstück-Träger 25 ist nach Art einer Brücke ausgebildet, die auf dem Werkstück-Träger-Bett 24 abgestützte Seiten-Wangen 26, 27 aufweist, in denen ein Schwenk-Träger 28 um eine in x-Richtung verlaufende Schwenkachse 29 schwenkbar gelagert ist. Der Schwenk-Antrieb erfolgt mittels eines Schwenk-Motors 30.

An dem dem Schwenk-Motor 30 abgewandten Ende des Schwenk-Trägers 28, also im Bereich der diesem Ende zugeordneten Seiten-Wange 27, greift am Schwenk-Träger 28 eine Torsions-Kompensations-Einrichtung 31 an, die in jeder Position eine im Wesentlichen konstante Kraft ausübt.

Auf dem Schwenk-Träger 28 sind zwei Werkstück-Halter 32, 33 angeordnet, die als Y-Drehtische ausgebildet sein können.

Die bisher geschilderte Werkzeugmaschine ist aus der EP-Patentanmeldung 03 023 017.1 bekannt. Bezüglich weiterer Einzelheiten, insbesondere bezüglich der Ausgestaltung der Torsions-Kompensations-Einrichtung 31 darf hierauf verwiesen werden.

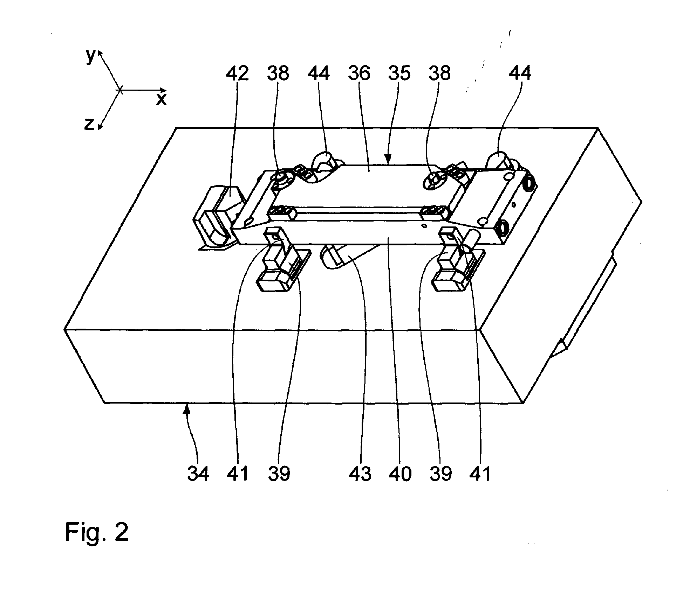

Die Werkstück-Halter 32, 33 weisen jeweils eine auf dem Schwenk-Träger 28 angebrachte Grundplatte 34 auf, auf der wiederum eine Werkstück-Tragplatte 35 angeordnet ist. Wie sich im Wesentlichen aus Fig. 2 ergibt, weist die im Wesentlichen quaderförmige Werkstück-Tragplatte 35 eine Auflagefläche 36 für ein Werkstück 37 auf. Sie ist mit zwei über die Auflagefläche 36 in y-Richtung vorragenden Index-Zapfen 38 versehen, die in im Durchmesser gleiche Index-Bohrungen in der der Auflagefläche 36 zugewandten Bezugsfläche des Werkstücks 37 eingreifen, wodurch die Lage des Werkstücks 37 zur Tragplatte 35 in der durch die Auflagefläche 36 vorgegebenen Ebene festgelegt wird. Das Werkstück 37 wird mittels nicht dargestellter Halteschrauben gegen die Auflagefläche 36 der Tragplatte 35 gespannt.

An der Tragplatte 35 und der Grundplatte 34 sind Einrichtungen vorgesehen, die eine schnelle und lagegenaue Verbindung zwischen der Grundplatte 34 und der Werkstück-Tragplatte 35 ermöglichen, so dass das Werkstück 37, wenn es zusammen mit der Tragplatte 35 von einer Werkzeugmaschine zu einer mit dieser verketteten weiteren Werkzeugmaschine und von dort wieder zur nächsten verketteten Werkzeugmaschine transportiert wird, jeweils nach Befestigung der Werkstück-Tragplatte 35 an einer jeder Werkzeugmaschine zugeordneten identischen Grundplatte 34 eine genau definierte Lage zu jeder Werkzeugmaschine hat.

Hierzu sind an der Grundplatte 34 zwei gleichartig ausgebildete Halteelemente 39 angebracht, denen an der zugewandten Seitenfläche 40 der Tragplatte 35 angebrachte Gegen-Halteelemente 41 zugeordnet sind. Durch entsprechende Ausgestaltung der Halteelemente 39 und der Gegen-Halteelemente 41 wird die Tragplatte 35 beim Andrücken gegen die Halteelemente 39 in z-Richtung in ihrer Lage festgelegt und in y-Richtung nach unten gedrückt.

An der Grundplatte 34 ist weiterhin ein Widerlager 42 angeordnet, gegen das die Werkstück-Tragplatte 35 in x-Richtung in exakter Position anliegt.

Weiterhin ist an der Grundplatte 34 zwischen dieser und der Tragplatte 35 eine in der x-z-Ebene wirkende Schräg-Spann-Einrichtung 43 vorgesehen, die schräg zur x-Richtung und schräg zur z-Richtung wirkt und bei entsprechender Beaufschlagung die Tragplatte 35 sowohl gegen die Halteelemente 39 als auch gegen das Widerlager 42 drückt. Auf der der Seitenfläche 40 gegenüberliegenden Seite der Tragplatte 35 sind an der Grundplatte 35 Nieder-Spann-Einrichtungen 44 vorgesehen, mittels derer die Tragplatte 35 auf die Grundplatte 34 niedergespannt wird.

Die bisher geschilderte Grundplatte 34 mit Werkstück-Tragplatte 35 ist aus der EP 1 260 304 B 1 (entsprechend US 6,619,641 B2) bekannt, worauf bezüglich weiterer Einzelheiten verwiesen wird.

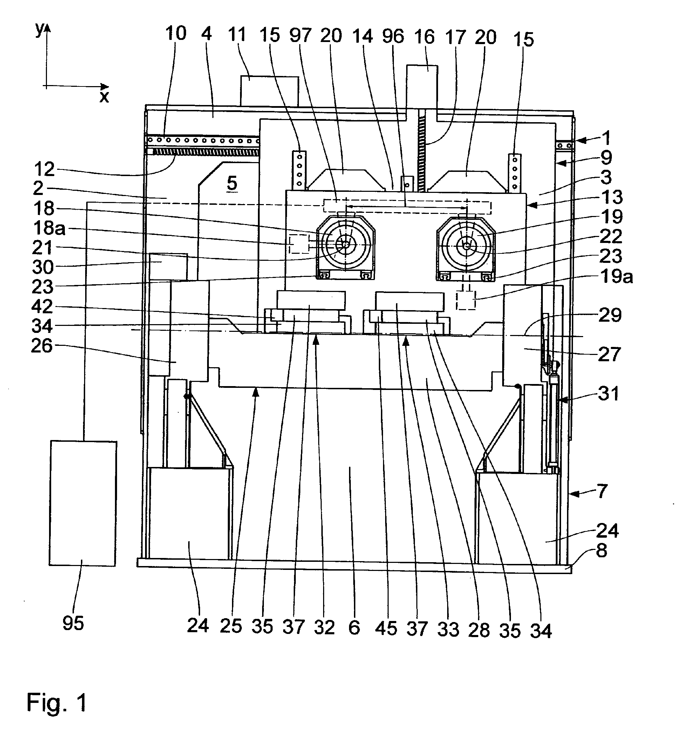

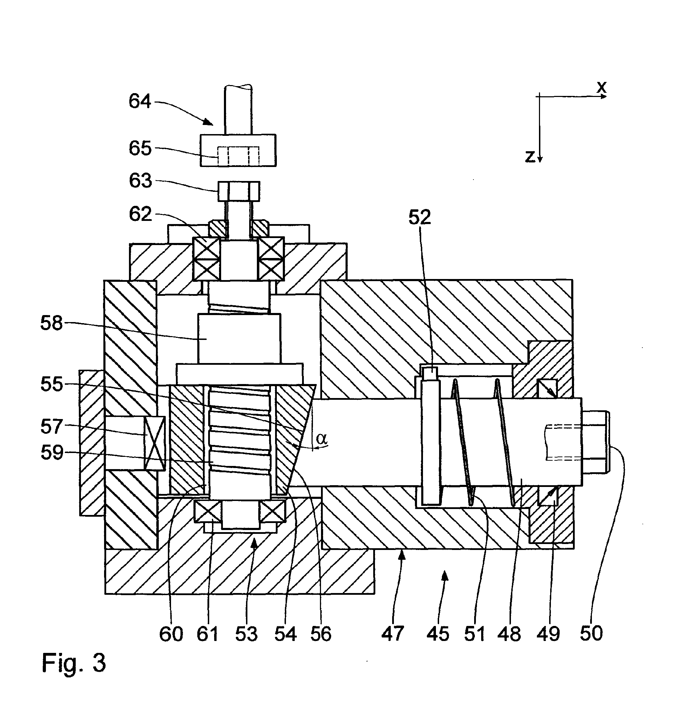

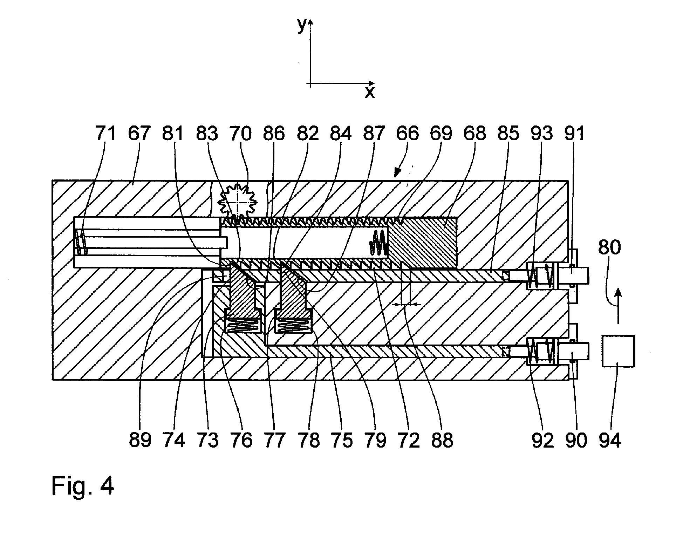

Während bei dem in Fig. 1 links dargestellten Werkzeug-Halter 32 das Widerlager 42 entsprechend der Darstellung in Fig. 2 in x-Richtung ortsfest - wenn auch gegebenenfalls von Hand einstellbar - ausgebildet ist, ist bei dem in Fig. 1 rechts dargestellten Werkstück-Halter 33 ein in x-Richtung fein verstellbares Widerlager 45 vorgesehen, für das Ausgestaltungen in den Fig. 3 und 4 dargestellt sind.

Das in Fig. 3 dargestellte Widerlager 45 weist ein mehrteiliges Gehäuse 47 auf, in dem ein bolzenartiger Widerlager-Körper 48 in x-Richtung verschiebbar und mittels einer Dichtung 49 staubdicht gelagert ist. Er weist an seinem aus dem Gehäuse 47 herausragenden Ende eine Anschlag-Fläche 50 auf, die gegen die Werkstück-Tragplatte 35 anliegt, gegen die sich also die Werkstück-Tragplatte 35 in x-Richtung abstützt. Der Widerlager-Körper 48 wird mittels einer vorgespannten Schrauben-Druck-Feder 51 in seine weitestmöglich in das Gehäuse 47 hineingeschobene Stellung gedrückt. Der Widerlager-Körper 48 ist in dem Gehäuse 47 mittels einer Verdreh-Sicherung 52 undrehbar gelagert, ist also nur in x-Richtung verschiebbar, und im Übrigen in y- und z-Richtung spielfrei im Gehäuse 47 gelagert.

An dem der Anschlag-Fläche 50 entgegengesetzten Ende des Widerlager-Körpers 48 ist im Gehäuse 47 eine Verstell-Einrichtung 53 vorgesehen. Diese weist einen Verstell-Körper 54 auf, der mittels einer Keilfläche 55 gegen eine Gegen-Keilfläche 56 anliegt, die an dem im Gehäuse 47 befindlichen Ende des Widerlager-Körpers 48 ausgebildet ist. Der Verstell-Körper 54 ist im Gehäuse 47 in z-Richtung, also senkrecht zu der die Verschieberichtung des Widerlager-Körpers 48 definierenden x-Richtung verschiebbar gelagert. Er ist im Gehäuse 47 mittels einer Verdreh-Sicherung 57 undrehbar gelagert und im Übrigen in x- und y-Richtung spielfrei abgestützt.

Der Verstell-Körper 54 ist einstückig, auf jeden Fall aber drehfest mit einer Spindel-Mutter 58 ausgebildet bzw. verbunden, die von einer GewindeSpindel 59 in z-Richtung durchsetzt wird. Hierzu weist der Verstell-Körper 54 eine Durchgangs-Öffnung 60 auf. Die Spindel 59 ist im Gehäuse 47 mittels Lagern 61, 62 in ihrer Längsrichtung, also in z-Richtung, unverschiebbar und im Übrigen frei drehbar gelagert. Zum Drehantrieb der Spindel 59 ist an deren außerhalb des Gehäuses 47 befindlichen, der Werkzeug-Spindel 19 zugewandten Ende ein Mehrkant-Profil 63 ausgebildet. Durch Verdrehen der Spindel 59 werden die Keilflächen 55, 56 im Wesentlichen in z-Richtung gegeneinander verschoben, wodurch der Widerlager-Körper 48 mit der Anschlag-Fläche 50 in x-Richtung verschoben wird. Da der Keilwinkel α gegenüber der z-Richtung, also gegenüber der Verschieberichtung des Verstell-Körpers 54, sehr klein ist, besteht zwischen dem Verstell-Körper 54 und dem Widerlager-Körper 48 Selbsthemmung, d. h. es kann keine Verschiebung des Widerlager-Körpers 48 aufgrund der hohen Andrückkräfte zwischen Tragplatte 35 und Widerlager-Körper 48 stattfinden. Entsprechend gilt dies auch für den durch die Spindel 59 und die Spindel-Mutter 58 gebildeten Antrieb, der ebenfalls selbsthemmend ausgestaltet ist. Dadurch, dass der Keilwinkel α sehr klein ist, findet gleichzeitig auch noch eine Untersetzung der Bewegung des Verstell-Körpers 54 in z-Richtung in die Bewegung des Widerlager-Körpers 48 in x-Richtung statt.

Die Verstellung des Verstell-Körpers 54 durch Verdrehen der Spindel 59 erfolgt über ein Werkzeug 64 mit einem dem Mehrkant-Profil 63 komplementären Mehrkant-Steck-Profil 65, das nach Art eines Steckschlüssels ausgebildet ist. Das Werkzeug 64 wird zur jeweiligen Einstellung der Anschlag-Fläche 50 und damit der Werkstück-Tragplatte 35 in x-Richtung in die Werkzeug-Spindel 19 aufgenommen und von dieser angetrieben. Durch entsprechendes Verfahren des x-Schlittens 9 und des y-Schlittens 13 und der Werkzeug-Spindel 19 in z-Richtung wird das Mehrkant-Steck-Profil 65 des Werkzeugs 64 mit dem Mehrkant-Profil 63 in Eingriff gebracht, woraufhin dann die geschilderte Verstellung erfolgt. Durch diese Ausgestaltungen ist eine stufenlose Verstellung der Anschlag-Fläche 50 in x-Richtung möglich.

Bei der Ausgestaltung nach Fig. 4 wird die Spindel 59 mittels einer von der Werkzeug-Spindel 19 unabhängigen Antriebs-Einrichtung 66 angetrieben. Diese weist ein sich im Wesentlichen in Richtung des Widerlager-Körpers 48, also in x-Richtung, erstreckendes Gehäuse 67 auf, in dem ein länglich ausgebildeter weitgehend hohler Antriebs-Körper 68 in x-Richtung verschiebbar angeordnet ist. Er trägt an seiner Oberseite eine Antriebs-Verzahnung 69, in die ein mit der Spindel 59 gekoppeltes Antriebs-Ritzel 70 eingreift. Der hohl ausgebildete Antriebs-Körper 68 wird mittels einer vorgespannten Schrauben-Druck-Feder 71 in eine - in Fig. 4 rechte - Lage gedrückt.

An der der Antriebs-Verzahnung 69 entgegengesetzten unteren Seite ist der Antriebs-Körper 68 mit einer Rast-Verzahnung 72 versehen. In diese Rast-Verzahnung 72 greift ein quer zur in x-Richtung liegenden Verschieberichtung des Antriebs-Körpers 68 - in der Zeichnung in y-Richtung - verschiebbares riegelartiges Verstell-Element 73 mit einem MitnehmerVorsprung 74 ein. Das Verstell-Element 73 ist in einem in Verschieberichtung des Antriebs-Körpers 68 im Gehäuse 67 verschiebbaren Verstell-Schieber 75 verschiebbar gelagert und wird mittels einer vorgespannten Druck-Feder 76 gegen die Rast-Verzahnung 72 gedrückt. Benachbart zum Verstell-Element 73 ist ein ebenfalls riegelartiges Rast-Element 77 im Gehäuse 67 verschiebbar gelagert und ebenfalls mittels einer Druck-Feder 78 in Richtung zur Rast-Verzahnung 72 belastet, in die es mit einem Rast-Vorsprung 79 eingreift. Die Rast-Verzahnung 72, der MitnehmerVorsprung 74 des Verstell-Elementes 73 und der Rast-Vorsprung 79 des Rast-Elementes 77 sind komplementär zueinander ausgebildet. Sie weisen jeweils eine in Verschiebe-Richtung 80 der Elemente 73, 77 verlaufende Haltefläche 81 bzw. 82 und eine schräg geneigt hierzu verlaufende Gleitfläche 83 bzw. 84 auf.

Benachbart zur Rast-Verzahnung 72 und parallel zur in x-Richtung verlaufenden Verschiebe-Richtung des Antriebs-Körpers 68 ist eine Entriegelungs-Stange 85 im Gehäuse 67 verschiebbar gelagert. Diese weist eine mit der Gleitfläche 83 des Verstell-Elementes 73 zusammenwirkende Entriegelungs-Fläche 86 und eine mit der Gleitfläche 84 des Rast-Elements 77 zusammenwirkende weitere Entriegelungs-Fläche 87 auf. Bei einer Verschiebung der Entriegelungs-Stange 85 in das Gehäuse 67 hinein werden sowohl das Verstell-Element 73 als auch das Rast-Element 77 außer Eingriff mit der Rast-Verzahnung 72 gebracht.

Bei einer Betätigung des Verstell-Schiebers 75 in das Gehäuse 67 hinein nimmt dagegen das Verstell-Element 73 den Antriebs-Körper 68 mit, während das Rast-Element 77 aus der Rast-Verzahnung 72 hinaus gedrückt wird und dann wieder einrastet. Der Antriebs-Körper 68 kann also entsprechend der Zahn-Teilung 88 der Antriebs-Verzahnung schrittweise verstellt werden. Diese schrittweise Verstellung wird über das Antriebs-Ritzel 70 auf die Spindel 59 übertragen und führt entsprechend zu einer schrittweisen Verstellung der Anschlag-Fläche 50, wobei die Größe der jeweiligen Verstellschritte für die Anschlag-Fläche 50 im Bereich von 1 µm liegt. Damit bei einer Betätigung des Verstell-Elements 73 zur Verstellung der Spindel 59 die Entriegelungs-Stange 85 nicht von dem Verstell-Element 73 mitgenommen wird, ist in der Entriegelungs-Stange 85 in Verschiebe-Richtung vor dem Verstell-Element 73 eine ausreichend große Ausnehmung 89 ausgebildet.

Sowohl der Verstell-Schieber 75 als auch die Entriegelungs-Stange 85 ragen aus dem Gehäuse 67 hinaus und weisen dort Betätigungs-Zapfen 90 bzw. 91 auf. Sie sind mit Druck-Federn 92, 93 belastet, die sie in ihre Ruhestellung drücken, in der die Betätigungs-Zapfen 90, 91 ihre am weitesten aus dem Gehäuse 67 herausragende Position aufweisen.

Die Betätigung des Verstell-Elementes 73 bzw. der Entriegelungs-Stange 85 erfolgt ebenfalls über die Werkzeug-Spindel 19, und zwar mittels eines Betätigungs-Elementes 94, das in die Spindel 19 eingespannt und dann bei stillstehender Werkzeug-Spindel 19 durch Verfahren in x-y- und z-Richtung vor einen der Betätigungs-Zapfen 90 bzw. 91 gebracht wird. Durch Verschieben in x-Richtung wird dann der Betätigungs-Zapfen 90 bzw. 91 betätigt. Dieses Betätigungs-Element 94 kann aber auch fest an der Werkzeug-Spindel 19 angebracht sein. Wenn das Werkzeug 64 oder das Betätigungs-Element 94 in die Werkzeug-Spindel 19 eingespannt werden, können sie in einem Werkzeug-Magazin abgelegt sein, das an der Werkzeugmaschine angebracht ist. Derartige Ausgestaltungen sind vielfältig bekannt, beispielsweise aus der EP 0 806 998 B1, dem US-Patent 6,071,220 und der WO 2004/091852 A1, worauf verwiesen wird.

Die Auslösung der geschilderten Verstell-Vorgänge erfolgt über die Steuerung 95 der Werkzeugmaschine. Diese erhält in regelmäßigen Zeitabständen, beispielsweise von wenigen Minuten, eine Information über den Abstand 96 der z-Drehachsen 21, 22 der Werkzeug-Spindeln 18, 19. Diese Messung wird von einer in der Werkzeugmaschine befindlichen Abstands-Mess-Einrichtung 97 an die Steuerung 95 gegeben. Diese vergleicht den Ist-Wert des Abstandes 96 mit einem gespeicherten Soll-Wert und bringt diesen Ist-Wert wieder auf den Soll-Wert, und zwar durch entsprechende Verstellung, wie sie vorstehend geschildert worden ist.

## Patentansprüche

1. Doppelspindel-Werkzeugmaschine
- mit einem Ständer (1),
- mit zwei Werkzeug-Spindeln (18, 19), die
-- zueinander parallele, voneinander im Abstand (96) angeordnete Drehachsen (21, 22) aufweisen,
- mit zwei Werkstück-Haltern (32, 33),
- mit Einrichtungen zur Relatiwerschiebung der Werkstück-Halter (32, 33) und der Werkzeug-Spindeln (18, 19) zueinander,
**dadurch gekennzeichnet,**
- **dass** ein Werkstück-Halter (33)
-- eine Grundplatte (34),
-- eine auf der Grundplatte (32) angeordnete Werkstück-Tragplatte (35) und
-- ein die Werkstück-Tragplatte (35) in einer durch die Drehachsen (21, 22) aufgespannten Ebene und quer zur Richtung der Drehachsen (21, 22) verstellbares Widerlager (45) aufweist,
- **dass** das Widerlager (45) eine Verstell-Einrichtung (53) aufweist,
- **dass** eine Änderungen des Abstands (96) der Drehachsen (21, 22) erfassende Abstands-Mess-Einrichtung (97) vorgesehen ist und
- **dass** eine Steuerung (95) vorgesehen ist, die
-- einerseits mit der Abstands-Mess-Einrichtung (97) und
-- andererseits mit einer Betätigungs-Einrichtung für die Verstell-Einrichtung (53) verbunden ist und
-- zur Ansteuerung der Betätigungs-Einrichtung in Abhängigkeit von gemessenen Abstands-Änderungen ausgebildet ist.

2. Doppelspindel-Werkzeugmaschine nach Anspruch 1, **dadurch gekennzeichnet,**
**dass** das Widerlager (45) einen die Werkstück-Tragplatte (35) abstützenden, quer zur Richtung der Drehachsen (21, 22) verstellbaren Widerlager-Körper (48) aufweist.

3. Doppelspindel-Werkzeugmaschine nach Anspruch 2, **dadurch gekennzeichnet,**
**dass** die Verstell-Einrichtung (53) einen mit dem Widerlager-Körper (48) gekoppelten Spindel-Mutter-Trieb (59, 58) aufweist, der von der Betätigungs-Einrichtung betätigbar ist.

4. Doppelspindel-Werkzeugmaschine nach Anspruch 3, **dadurch gekennzeichnet,**
**dass** zwischen dem Spindel-Mutter-Trieb (59, 58) und dem Widerlager-Körper (48) eine Übertragungs-Einrichtung mit einer Keilfläche (55) und einer Gegen-Keilfläche (56) angeordnet ist.

5. Doppelspindel-Werkzeugmaschine nach Anspruch 1, **dadurch gekennzeichnet,**
**dass** die Verstell-Einrichtung (53) selbsthemmend ausgebildet ist.

6. Doppelspindel-Werkzeugmaschine nach Anspruch 1, **dadurch gekennzeichnet,**
**dass** die Verstell-Einrichtung (53) direkt mittels eines von der zugeordneten Werkzeug-Spindel (19) drehantreibbaren Werkzeugs (64) stufenlos betätigbar ist.

7. Doppelspindel-Werkzeugmaschine nach Anspruch 1, **dadurch gekennzeichnet,**
**dass** die Verstell-Einrichtung (53) mittels einer gesonderten Antriebs-Einrichtung (66) schrittweise betätigbar ist.

8. Doppelspindel-Werkzeugmaschine nach Anspruch 7, **dadurch gekennzeichnet,**
**dass** die Antriebs-Einrichtung (66) einen in einer Verschiebe-Richtung verschiebbaren Antriebs-Körper (68) mit einer Antriebs-Verzahnung (69) zur Betätigung der Verstell-Einrichtung (53) und eine Rast-Verzahnung (72) aufweist, in die ein Verstell-Element (73) und ein Rast-Element (77) jeweils lösbar eingreifen.

9. Doppelspindel-Werkzeugmaschine nach Anspruch 8, **dadurch gekennzeichnet,**
**dass** das Verstell-Element (73) in einem in Verschiebe-Richtung des Antriebs-Körpers (68) verschiebbaren Verstell-Schieber (75) gelagert ist.

10. Doppelspindel-Werkzeugmaschine nach Anspruch 9, **dadurch gekennzeichnet,**
**dass** das Verstell-Element (73) und das Rast-Element (77) quer zur Verschiebe-Richtung des Antriebs-Körpers (68) verschiebbar gelagert sind.

11. Doppelspindel-Werkzeugmaschine nach Anspruch 10, **dadurch gekennzeichnet,**
**dass** ein mit dem Verstell-Element (73) und dem Rast-Element (77) gekoppeltes Entriegelungs-Element (85) vorgesehen ist, bei dessen Verschiebung das Verstell-Element (73) und das Rast-Element (77) außer Eingriff mit dem Antriebs-Körper (68) gebracht werden.

12. Doppelspindel-Werkzeugmaschine nach Anspruch 10 und 11, **dadurch gekennzeichnet,**
**dass** der Verstell-Schieber (75) und das Entriegelungs-Element (85) von der zugeordneten Werkzeug-Spindel (19) betätigbar sind.
